# EUROPEAN PATENT APPLICATION

(11) **EP 1 378 703 A1**
(43) Date of publication of application: **07.01.2004**
(21) Application number: 02380153.3
(22) Date of filing: 05.07.2002
(51) Int. Cl.: F16L 37/23, F17C 7/02

(54) **Free-outlet for the connection to liquid petroleum gas containers, with blocking means**

(71) Applicant: REPSOL BUTANO, S.A., 28015 Madrid (ES)
(72) Inventor: de Andrés Alonso, Raimundo, 28030 Madrid (ES)
(74) Representative: Riera Blanco, Juan Carlos

(57) **Abstract**

A free-outlet adaptor for the connection to liquid petroleum gas containers, of the type that are connected to the outlet gas valve by means of a lower coupler (6) which incorporates a number of balls (7) capable of being housed in an external perimeter groove provided in said outlet valve, is disclosed. The adaptor is of the type that comprises a non-return valve (5) incorporated in the outlet (4) and driven by a spring. The adaptor has been provided with blocking means (8,10) used to prevent the coupling with the gas container from being made with the adaptor in the open position. These blocking means (8,10) comprise a disc (8) inserted in the operating rod of the container's outlet valve and dispaceable with respect to it, a spring (9) that pushes on said disc in a longitudinal direction, and protruding parts (10) positionable with respect to the coupler, that permit/avoid the connection of the adaptor to the container outlet depending on their position.

## Description

### Object of the Invention

The present invention refers to a free-outlet adaptor for the connection to liquid petroleum gas containers, with blocking means, which provides essential new characteristics and notable advantages with regard to the means known and used for the same purposes in the current state of the art.

More particularly, the invention proposes the development of a free-outlet adaptor device which can serve as a means of connection between the consumption apparatus and the valve of the liquid petroleum gas refillable cylinders, which provides an increased safety level, as the incorporation of an array of blocking means has been designed which makes it impossible for the adaptor to be mounted on the container valve if said adaptor is open. Such means include the incorporation of a blocking disc and a blocking disc spring which pushes said disc downwards, so that, when the adaptor is in an open position, the balls borne by the coupling ring are prevented from reaching their proper position, with which, said coupling between adaptor and container valve results impossible.

The field of application of the invention is included in the industrial sector devoted to the manufacturing of apparatuses or devices for specific uses in the bottling and/or distribution of petroleum derived gases.

### Background and Summary of the Invention

A variety of adaptor devices for the connection between the different consumption apparatuses and the valves of the liquid petroleum gas refillable cylinders are known on the market, and the characteristics of said devices vary in accordance with the apparatus and the type of cylinder used.

A special feature common to all these devices consists in the fact that they should be designed so that they provide a level of safety and reliability in accordance with the application they are used for, taking into account the specific physical-chemical characteristics of the gas that is being handled. For this reason, the tendency of all the manufacturers of this type of devices lies basically in providing them with a structure which is easy to handle and which responds to the desired safety demands.

Although the currently existing adaptors evidently fulfil the safety requirements imposed by the existing regulations regarding this, with the adaptor which is going to be object of the detailed description hereinafter, the applicant has sought an additional contribution to the high safety level already incorporated in the existing products, and, in this sense, has developed an adaptor which is prevented from being connected to the outlet valve of the cylinder if said adaptor is open which could mean an unwanted leak of liquid gas from inside the container.

For this purpose, the adaptor of the invention is a clear improvement on the already existing devices, as it takes advantage of the general structure of an already existing model to incorporate other elements which permit the addition of said functionality. These new components include a blocking disc, placed in a system which permits its insertion in the rod which operates the gas cylinder outlet valve, and which can be axially displaced thanks to the pushing action of a spring connected to said blocking disc and designed for this function. With this, when the adaptor is open and one tries to couple it with the gas outlet valve, there are protrusions which prevent the connector's balls from being introduced in their proper position, with which the gas cylinder-adaptor connection results impossible; however, when the adaptor is in a closed position, these protrusions have been rotated in a 90° angle by means of a control button, with which the connection between said adaptor and gas cylinder is now possible.

### Brief description of the Drawings

These and other characteristics and advantages of the invention will be more clearly revealed from the following detailed description of a preferred embodiment, given with a merely illustrative, nonlimiting character, referring to the attached drawings, in which:

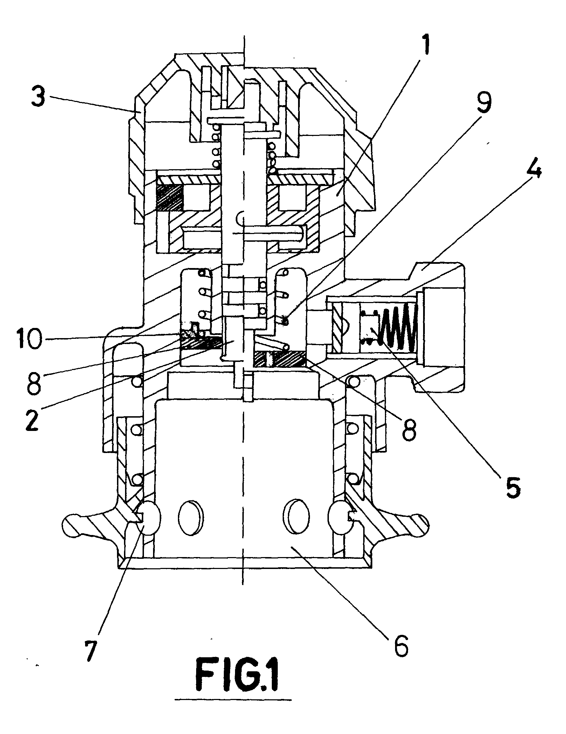

Figure 1 shows a transversal section representation of an adaptor made according to the invention, divided, by the central axis, in two halves which show the adaptor's closed and open positions respectively.

### Description of a Preferred Embodiment

According to the abovementioned, the detailed description of the preferred embodiment will be made using the attached drawings, in whose sole Figure a representation of the adaptor of the invention is shown, divided, by the central longitudinal axis, in two halves, one of which, specifically the one which appears on the left of the representation, illustrates the adaptor in its closed position, whilst the other half, specifically the one which appears on the right of the representation, illustrates the adaptor in its open position.

As can be observed from the drawing, the adaptor which the improvement of the invention has been carried out on, is of the kind that includes a body 1 inside of which is housed an axially positioned rod 2, longitudinally displaceable by means of the operation of an externally controlled rotating button 3, and also provided with a external connecting nozzle 4 designed for its connection to the external consumption apparatus, inside of which a non-return valve 5 is housed. A gas cylinder outlet valve coupling tip 6 is fitted to the end of the opposite body to that of the control button 3, which incorporates, in a known manner, an array of balls 7 intended to be housed in a perimeter groove in the external wall of said gas outlet valve.

The previous description corresponds, as has been stated, to a type of adaptor that is already conventional in the state of the art. For the purpose of the invention, the incorporation of the elements that make it possible to provide the device with the additional functionality that ensures the connection between the adaptor and the gas outlet valve cannot be made, except when the adaptor is in a closed position, and, therefore, completely ensures that unwanted gas leaks will not happen during, and after, the coupling operation, has been included in this adaptor. Such elements can basically be resumed in a blocking disc 8, a spring 9 connected to the blocking disc, and protrusions 10 which can be moved to different operative positions by the rotation of the external control button 3. Said spring 9 exerts its pushing action on said blocking disc 8, pushing it outwards in the body's longitudinal axial direction, which will cause the displacement of said blocking disc when the adaptor position permits it.

Indeed, observing the left side representation in Figure 1, corresponding to the adaptor's closed position, it can be observed that the longitudinal displacement rod 2 is in its highest position (most retracted position), and that the blocking disc also occupies its respective position, higher in the drawing (i.e. more retracted longitudinally). In this position, the protrusions 10 permit that the coupling operation between the adaptor device and the cylinder valve can be carried out, as they do not hinder the adaptor's movement nor the balls being housed, in a conventional manner, in the valve's external groove (not represented).

Nevertheless, if, at a given time, an attempt is made to fit the adaptor to a cylinder outlet valve with said adaptor in open position, i.e. as it is represented in the right half of the representation, in which the button 3 has been rotated in a 90° angle, with the rod 2 advanced to a position in which its coupling would undesirably operate the outlet valve, with the blocking disc 8 displaced forwards, pushed by the spring 9, and with the protrusions 10 placed, therefore, at 90° with respect to the coupler, the system would prevent said coupler from being able to be moved to its proper position, with which the balls 7 would be prevented from being housed in the external groove of the valve, and therefore the coupling cannot be carried out.

As can be understood, despite the fact that the abovementioned improvement is a simple idea which is easily implemented, it is no less effective for this, instead, on the contrary, it provides a considerable increase in safety of use for consumers and users of these kinds of devices.

It is not considered to be necessary to elaborate on the content of this description so that a person skilled in the art can comprehend its scope and the advantages derived from the invention, and develop and carry out its object.

However, it must be understood that the invention has been disclosed according to a preferred embodiment, so that modifications can be made to it without it involving any alteration of said invention's basis. These modifications can affect the shape, size and/or manufacturing materials.

## Claims

1. Free-outlet adaptor for the connection to liquid petroleum gas containers, with blocking means, particularly for its connection to conventional refillable cylinders, the adaptor being made up from a body (1) which incorporates a lower coupler (6) for its positioning on the cylinder outlet valve with the aid of an array of balls (7), provided with an outlet nozzle (4) for its connection to an external consumption apparatus, said nozzle including a non-return valve (5) inside, and the gas flow opening and closing operations controlled from an external control button (3), connected to an axially displaceable rod (2), according to the body's longitudinal direction, which is **characterised in that** said adaptor also includes a blocking disc (10), inserted on said rod (2) with the possibility of displacement in relation to it; a spring (9) of the blocking disc, which pushes on said disc (8) in a longitudinal direction; and protrusions (10) which can be position with respect to the coupler, with the special feature that, depending on the position occupied by said protrusions in relation to the coupler, the coupling operation can either be carried out or not, by virtue of which the coupling balls (7) are either permitted to be introduced in the external perimeter groove of the liquid gas cylinder outlet valve or not.
